# EUROPEAN PATENT APPLICATION

(11) **EP 4 535 823 A1**
(43) Date of publication of application: **09.04.2025**
(21) Application number: 22944058.1
(22) Date of filing: 01.06.2022
(51) Int. Cl.: H04R 3/00, G10K 11/178, H04R 1/02, H04R 3/12

(54) **IN-VEHICLE ACOUSTIC DEVICE AND IN-VEHICLE ACOUSTIC CONTROL METHOD**

(71) Applicant: NISSAN MOTOR CO., LTD., Kanagawa 221-0023 (JP)
(72) Inventor: MAKITA, Shota, Atsugi-shi, Kanagawa 243-0123 (JP); YAMANO, Saori, Atsugi-shi, Kanagawa 243-0123 (JP); MORI, Souichirou, Atsugi-shi, Kanagawa 243-0123 (JP); YOSHINO, Daisuke, Atsugi-shi, Kanagawa 243-0123 (JP)
(74) Representative: Osha BWB
(86) International application number: PCT/JP2022/022327
(87) International publication number: WO 2023/233586

(57) **Abstract**

An in-vehicle acoustic device according to the embodiment includes a plurality of speakers 3 disposed in a vehicle 200, a plurality of microphones 2 disposed in the vehicle 200, and a controller 10 that controls the microphone 2 corresponding to a first seating position of a first passenger and the speaker 3 corresponding to a second seating position of a second passenger so as to cause a voice of the first passenger input from the microphone 2 to be heard by the second passenger other than the first passenger via the speaker 3, the controller 10 controls a sound volume of a reproduced voice output from the speaker 3 corresponding to the second seating position based on a positional relation between the first seating position and the second seating position.

## Description

### Technical Field

The present invention relates to an in-vehicle acoustic device and an in-vehicle acoustic control method.

### Background Art

There has conventionally known a sound field control device that controls a sound field in a vehicle cabin so as to cause participants to easily have a conversation, with considerations to non-participants of the conversation (for example, Patent Document 1). The sound field control device described in Patent Document 1 detects seating positions of passengers in a vehicle, detects a speaking person and a receiving person of a conversation made in a vehicle cabin as participants from the passengers, and, when a conversation is made in the vehicle cabin, controls a sound field by a plurality of speakers disposed corresponding to seating positions in the vehicle based on the seating positions of the participants and seating positions of non-participants as passengers who are not participants. The sound field control device controls the sound field such that, compared to the states prior to the control, a sound volume at the seating positions of the non-participants is not reduced, but a sound volume at the seating positions of the participants is reduced.

### Prior Art Document

### Patent Document

Patent Document 1: WO 2018/026704

### Summary of Invention

### Problems to be Solved by Invention

However, the above-described conventional sound field control device equally reduces the sound volume of the speakers disposed corresponding to the seating positions of the participants of the conversation, and therefore, has a problem that it is not applicable to a conversation form in which the passengers have a conversation through microphones and speakers in the vehicle cabin.

The problem to be solved by the present invention is to provide an in-vehicle acoustic device and an in-vehicle acoustic control method with which passengers are able to smoothly have a conversation through microphones and speakers in a vehicle cabin.

### Means for Solving problems

The present invention solves the above-described problem by controlling a sound volume of a reproduced voice output from a speaker corresponding to a second seating position based on a positional relation between a first seating position of a first passenger and the second seating position of a second passenger other than the first passenger when a voice of the first passenger input from a microphone is caused to be heard by the second passenger via the speaker.

### Effects of Invention

With the present invention, passengers are able to smoothly have a conversation through microphones and speakers in a vehicle cabin.

### Brief Description of Drawings

FIG. 1 is a block diagram of a vehicle including an in-vehicle acoustic system according to one embodiment of the present invention.
FIG. 2 is a plan view of the vehicle.
FIG. 3 is a plan view of the vehicle.
FIG. 4 is a plan view of the vehicle
FIG. 5A is a table for describing on and off of microphones/speakers in first to third rows.
FIG. 5B is a table showing a correlation between seating positions of passengers and a voice audible by the passengers.
FIG. 6A is a table for describing on and off of the microphones/speakers in the first to third rows.
FIG. 6B is a table showing a correlation between the seating positions of the passengers and the voice audible by the passengers.
FIG. 7A is a table for describing on and off of the microphones/speakers in the first to third rows.
FIG. 7B is a table showing a correlation between the seating positions of the passengers and the voice audible by the passengers.
FIG. 8A is a table for describing on and off of the microphones/speakers in the first to third rows.
FIG. 8B is a table showing a correlation between the seating positions of the passengers and the voice audible by the passengers.
FIG. 9 is a flowchart of a control flow executed by a controller of the in-vehicle acoustic system according to a configuration.

### Mode for Carrying out the Invention

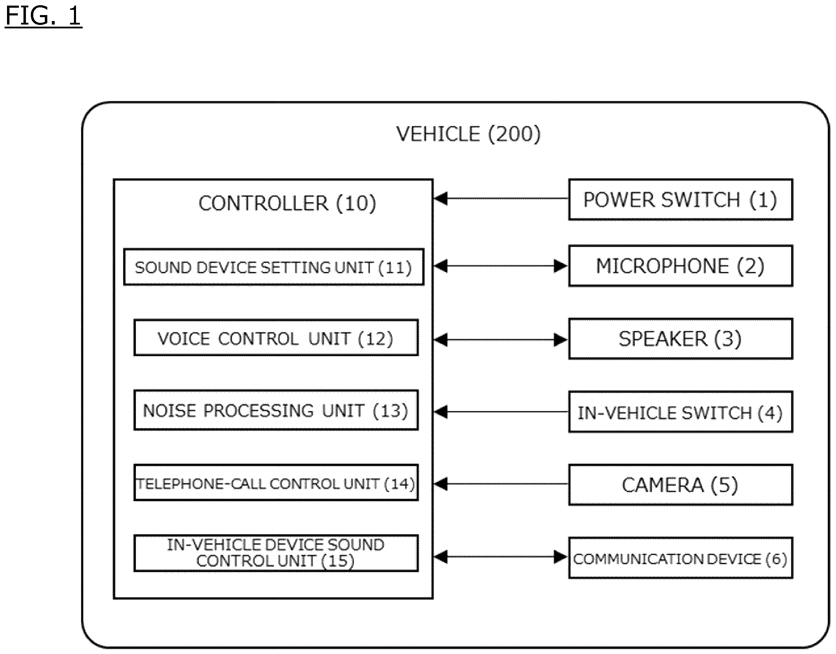

The following describes one embodiment of an in-vehicle acoustic system according to the present invention based on the drawings. FIG. 1 is a block diagram of a vehicle including the in-vehicle acoustic system according to one embodiment of the present invention. The in-vehicle acoustic system includes a power switch 1, a microphone 2, a speaker 3, an in-vehicle switch 4, a camera 5, a communication device 6, and a controller 10. The in-vehicle acoustic system is a system for controlling a conversation between passengers, a telephone call between a passenger and a user outside the vehicle, an output of a system sound of the in-vehicle system, and/or a sound environment at a specific seat through the speakers and/or microphones installed in a vehicle cabin. A device that includes at least the microphone 2, the speaker 3, and the controller 10 corresponds to an "in-vehicle acoustic device" of the present invention, and a control executed by the controller 10 corresponds to an "in-vehicle acoustic control method."

The power switch 1 is a main switch of a vehicle 200, and is a system for starting a driving source of the vehicle 200 and turning on an electrical system. The in-vehicle acoustic system is activated by turning on the power switch 1. When the vehicle 200 includes an engine, the power switch 1 corresponds to an ignition switch.

A plurality of the microphones 2 are disposed in the vehicle 200, and they convert a sound, such as a voice of a passenger, into an electric signal and output it to the controller 10. The microphone 2 has a noise cancelling function. A plurality of the speakers 3 are disposed in the vehicle 200, and they output any music and the like including the voice of the passenger, a voice of a user outside the vehicle, and a system sound of the in-vehicle system to each of the passengers in the vehicle 200.

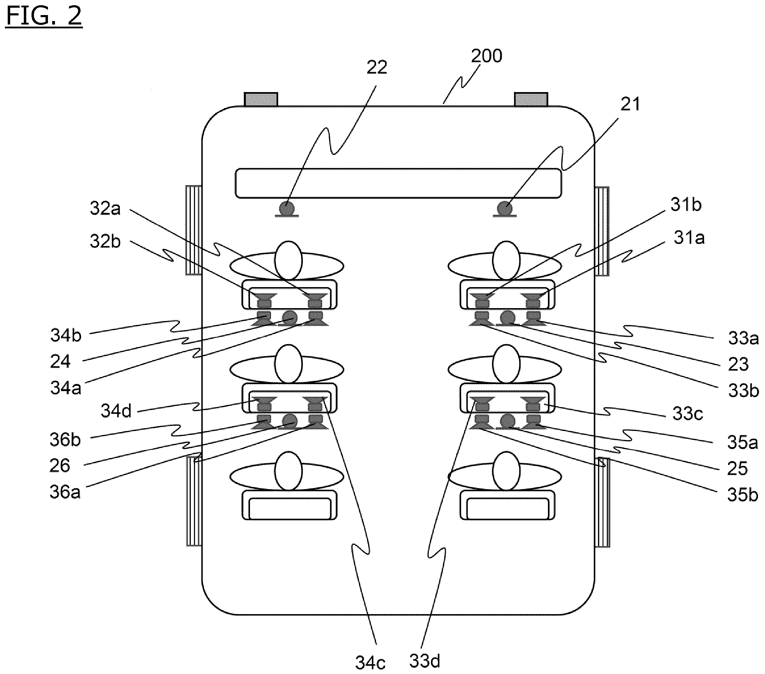

As illustrated in FIG. 2, the microphones 2 and the speakers 3 are installed in the vehicle so as to correspond to seating positions (positions of seats) of the passengers in the vehicle 200. FIG. 2 is a drawing for describing positions of the microphones 2 and the speakers 3, and illustrates a plan view of the vehicle 200.

In the example in FIG. 2, the vehicle 200 is provided with six seats, three rows of two seats each. The microphones 2 are constituted of six microphones 21 to 26, the speakers 3 are constituted of sixteen speakers 31a, 31b, 32a, 32b, 33a to 33d, 34a to 34d, 35a, 35b, 36a, and 36b. The microphone 21 and the speakers 31a, 31b are installed so as to correspond to a position of a driver's seat (a right side seat in a first row of the seats). The microphone 22 and the speakers 32a, 32b are installed so as to correspond to a position of a front passenger seat (a left side seat in the first row of the seats). The microphone 23 and the speakers 33a to 33d are installed so as to correspond to a position of a right side seat in a second row of the seats, and the microphone 24 and the speakers 34a to 34d are installed so as to correspond to a position of a left side seat in the second row of the seats. The microphone 25 and the speakers 35a, 35b are installed so as to correspond to a position of a right side seat in a third row of the seats, and the microphone 26 and the speakers 36a, 36b are installed so as to correspond to a position of a left side seat in the third row of the seats. That is, the microphones 2 are assigned to the seats such that a voice is easily received when a sitting passenger speaks. The speakers 3 are assigned to the seats such that a sound is easily heard by passengers when the sitting passengers hear the sound.

The speakers 31a, 31b, 32a, 32b, 33c, 33d, 34c, and 34d are disposed in head rests, and the speakers 33a, 33b, 34a, 34b, 35a, 35b, 36a, and 36b are disposed on seat bodies. The speakers 31a, 32a, 33a, 33c, 34a, 34c, 35a, and 36a are disposed on right sides of the corresponding seats such that a sound is audible from the right side of the passengers in a state of sitting on the seats. The speakers 31b, 32b, 33b, 33d, 34b, 34d, 35b, and 36b are disposed on left sides of the corresponding seats such that a sound is audible from the left side of the passengers in a state of sitting on the seats. The microphones 21 to 26 and the speakers 31a, 31b, 32a, 32b, 33a to 33d, 34a to 34d, 35a, 35b, 36a, and 36b do not have to be disposed to correspond to one seating position, and may be disposed to correspond to the plurality of seating positions. Correspondence relations between the speakers 31a, 31b, 32a, 32b, 33a to 33d, 34a to 34d, 35a, 35b, 36a, and 36b and the seating positions are not limited to the positions of the speakers relative to the seating positions, but the speakers and the seating positions may be associated by changing the sound positioning of the sound output from the speakers by a control of the controller 10. In the following description, the microphones 2 and the speakers 3 corresponding to the seating positions of the passengers are also simply referred to as "microphones of passengers" and "speakers of passengers," and when it is described as a microphone of a speaking person as a specific example of a passenger, it indicates a microphone corresponding to the seating position of the speaking person. For example, the microphone 2 and the speakers 3 of a driver correspond to the microphone 21 and the speakers 31a, 31b.

With reference to FIG. 1, the in-vehicle switch 4 is a switch for transmitting an operation command for controlling the in-vehicle acoustic system. The passenger operates the in-vehicle switch 4, and thus, is allowed to select a seat subject to a conversation, a seat with a blocked ambient sound, and a seat from which input of a sound is blocked. For example, when the in-vehicle switch 4 is installed near the driver's seat, and the driver operates the in-vehicle switch 4 to select a seat from which input of a sound is blocked, a voice input from the microphone 2 of the selected seat is adjusted, and the voice of the passenger on the selected seat can be controlled not to reach the driver through the speakers. The in-vehicle switch 4 may be a touch panel in a navigation system, a switch around a dashboard, or a switch reachable by a hand of a passenger other than the driver.

The camera 5 is an imaging device that obtains images of the passengers in the vehicle. The communication device 6 is a device that enables a telephone call with a user outside the vehicle through a telephone line. The communication device 6 may be connected to a mobile terminal, such as a smart phone owned by a passenger, and make a telephone call with a user outside the vehicle via the mobile terminal. At this time, the telephone call is made through the microphone 2 and the speaker 3 mounted in the vehicle, not through a microphone and a speaker of the mobile terminal.

The controller 10 is a main controller of the vehicle 200, and controls various kinds of systems, such as a drive system of the vehicle 200 and a navigation system. As a processor for controlling the in-vehicle acoustic system, the controller 10 controls the microphone 2 of the speaking person and the speakers 3 of a hearing person so as to allow a voice of the speaking person input from the microphone 2 to be heard by the hearing person other than the speaking person via the speakers 3. The controller 10 controls a sound volume of a reproduced voice output from the speakers 3 of the hearing person based on a positional relation between the seating position of the speaking person and the seating position of the hearing person. In the example in FIG. 1, the control unit of the vehicle 200 may be constituted of a plurality of control units, not limited to one controller 10. When the in-vehicle acoustic system is incorporated in an existing system of the vehicle 200, the controller 10 functions as a control unit for the in-vehicle acoustic system.

The controller 10 has a sound device setting unit 11, a voice control unit 12, a noise processing unit 13, a telephone-call control unit 14, and an in-vehicle device sound control unit 15 as function blocks, and programs for achieving respective functions in the respective function blocks are stored in a memory. The respective functions of the function blocks are achieved by a computer included in the controller 10 executing the programs. The function blocks are not limited to five, and there may be one to four or five or more function blocks.

The sound device setting unit 11 sets sound devices as control targets for controlling sound environments at respective seats. The sound device corresponds to the microphone 2 and the speaker 3. The sound device setting unit 11 sets the sound device as the control target (a control target device) based on an operation command of the in-vehicle switch 4, a captured image of the camera 5, and an external command received by the communication device 6. For example, when a passenger in the third row operates the in-vehicle switch 4 and selects a specific seat in order to have a conversation with a passenger in the first row, the sound device setting unit 11 sets the microphone 2 and the speakers 3 corresponding to the position of the seat of the conversation target as control target devices. When the sound environments are controlled corresponding to the seating position of the speaking person and the seating position of the hearing person in the vehicle cabin, the sound device setting unit 11 sets the microphones 2 and the speakers 3 of the speaking person and the hearing person as the control target devices. For example, in the example in FIG. 2, when all the passengers sit on the seats, all the microphones 2 and the speakers 3 are the control target devices.

The sound device setting unit 11 may set the control target device based on a captured image of the camera 5. For example, the sound device setting unit 11 detects a passenger who is having a conversation from a face image included in a camera image, and sets the microphone 2 and the speakers 3 of the detected passenger as the control target devices. When detecting that a passenger is sleeping from a camera image, the sound device setting unit 11 sets a control target speaker so as to turn off the speakers 3 of the passenger asleep. When detecting that a passenger is a child and is making a noise from a camera image, the sound device setting unit 11 sets a control target speaker so as to turn off the microphone 2 of the child.

The sound device setting unit 11 sets the control target device based on an external command received by the communication device 6. For example, when the communication device 6 receives a call command by telephone from outside of the vehicle 200 to the driver, the sound device setting unit 11 sets the microphone 21 and the speakers 31a, 31b of the driver as the control target devices such that the driver can call through the microphone 21 and the speakers 31a, 31b.

The voice control unit 12 controls a voice input/output from the control target devices set by the sound device setting unit 11. The control of the voice corresponds to adjustment of a sound volume and/or a position. The adjustment of the sound positioning may be adjusted by a magnitude of a sound volume of the speakers 3 installed for a seat (for example, the speakers 31a, 31b for the driver's seat) or may be adjusted by a magnitude of a sound volume output from one speaker 3. For example, when a passenger in the third row makes a conversation with a passenger in the first row through the microphones 2 and the speakers 3, the voice control unit 12 increases the sound volume from the speakers 3 in the third row when the voice from the first row as the speaking person is output from the speakers 3 in the third row.

The noise processing unit 13 generates a noise reduction sound for reducing a noise input from the microphone 2. The noise input to the microphone 2 is, for example, a road noise, a booming noise of an engine, and a sound generated by a motor and an inverter. In the noise process, for example, the noise is detected through the microphone 2 using a noise detection function (noise cancelling function) that the microphone 2 has, and the noise process is executed on the detected noise. The noise process enhances, for example, an original voice drown out by the noise and outputs it from the speakers 3. The noise process may, for example, cancel a sound other than the original voice by superimposing a signal of an opposite phase over a detected noise waveform. Thus, the noise processing unit reduces a noise on a real-time basis in accordance with a change in the noise inside and outside the vehicle 200.

The telephone-call control unit 14 controls a telephone call between a user outside the vehicle and a passenger using the communication device 6. When the communication device 6 receives a telephone call from a user outside the vehicle, the telephone-call control unit 14 identifies the passenger as a destination of the telephone call. The telephone-call control unit 14 identifies the passenger by, for example, face authentication using a captured image of the camera 5 and/or authentication using a key ID. The telephone-call control unit 14 transmits the information on the identified passenger to the sound device setting unit 11. The sound device setting unit 11 sets the microphone 2 and the speakers 3 of the passenger identified by the telephone-call control unit 14 as the control target devices. Additionally, the telephone-call control unit 14 controls the telephone call between the user outside the vehicle and the passenger during the telephone call between the user outside the vehicle and the passenger.

The in-vehicle device sound control unit 15 outputs a notification sound by the in-vehicle device from the speakers 31a, 31b of the driver of the vehicle 200. The notification sound of the in-vehicle device is, for example, a guide voice of a navigation system. The information indicated by the notification sound of the in-vehicle device is necessary for the driver, but is not necessarily necessary for the passengers other than the driver. Therefore, when the notification sound of the in-vehicle device is output, the in-vehicle device sound control unit 15 outputs the notification sound from the speakers 31a, 31b of the driver and does not output the notification sound from the other speakers 32a, 32b, 33a to 33d, 34a to 34d, 35a, 35b, 36a, and 36b. The in-vehicle device sound control unit 15 may change an output destination of the notification sound in accordance with the type of information indicated by the notification sound of the in-vehicle device. For example, when the information indicated by the notification sound of the in-vehicle device is shop information or the like, which is preferred to be provided to a passenger other than the driver, the in-vehicle device sound control unit 15 may output the notification sound from the other speakers 32a, 32b, 33a to 33d, 34a to 34d, 35a, 35b, 36a, and 36b.

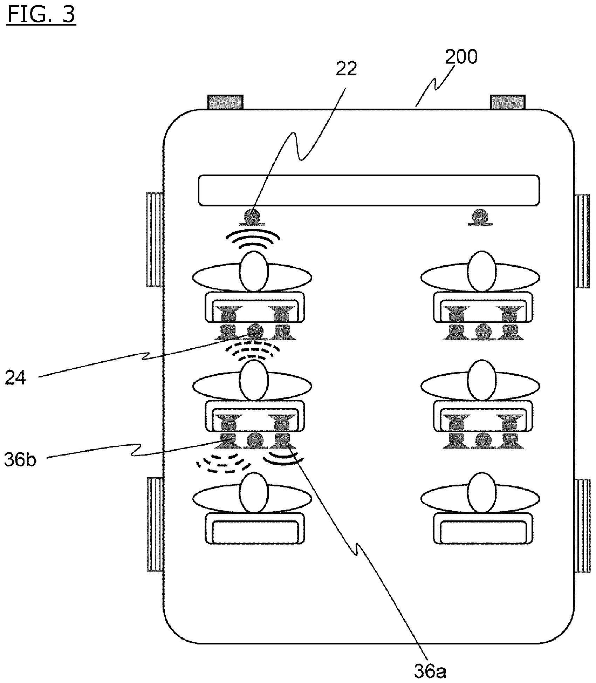

Next, controls of sound environments by the controller 10 will be described with specific examples. A control of a sound environment when a passenger in the first row and a passenger in the third row have a conversation will be described. FIG. 3 is a plan view of the vehicle 200, and illustrates a state where the passenger in the third row hears respective voices spoken by the passenger in the first row and a passenger in the second row. For icons indicative of the voices of the passengers in FIG. 3, the solid lines indicate the voice of the passenger in the first row and the dotted lines indicate the voice of the passenger in the second row.

The sound device setting unit 11 of the controller 10 sets the microphones 22, 24, and 26 and the speakers 32a, 32b, 34a to 34d, 36a, and 36b of the passengers in the first row to the third row positioned on the left side seats as the control target devices. The voice control unit 12 of the controller 10 receives voice information of the passengers in the first and second rows through the microphones 22 and 24. The voice control unit 12 outputs a reproduced voice of the passenger in the first row from the speaker 36b, and outputs a reproduced voice of the passenger in the second row from the speaker 36a. At this time, the voice control unit 12 increases a sound volume of the speaker 36b outputting the reproduced voice of the passenger in the second row to be larger than a sound volume of the speaker 36a outputting the reproduced voice of the passenger in the first row. That is, when the passenger in the third row hears the voices of the passengers in the first and second rows, the sound volume of the passenger in the second row is larger than the sound volume of the passenger in the first row. Thus, the controller 10 reduces the sound volume of the reproduced voice as a distance between the seating position of the seat of the speaking person and the seating position of the seat of the hearing person increases. Thus, the magnitudes of the reproduced sound volumes heard by the passenger in the third row enables to create a sense of distance between the respective seats in the embodiment.

Next, a control of a sound environment when a passenger on the left side in the third row and a passenger on the right side in the first row have a conversation will be described.

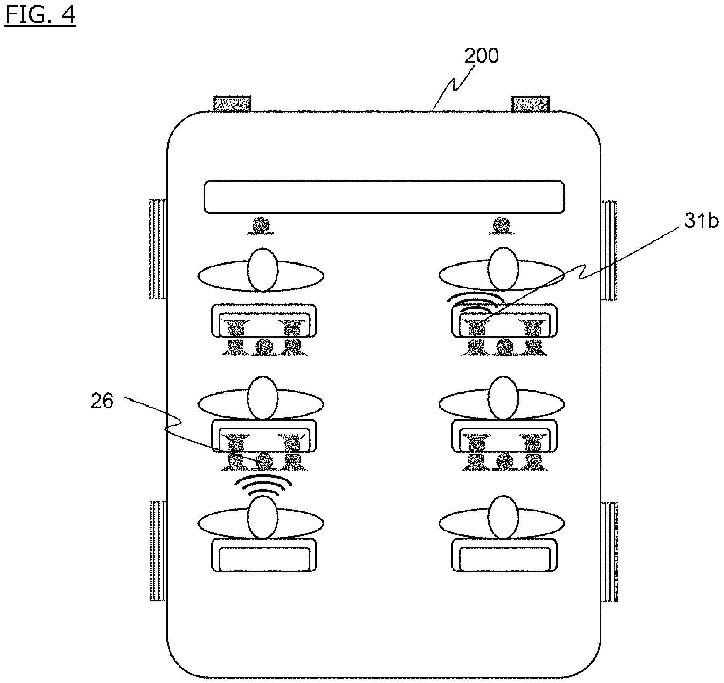

FIG. 4 is a plan view of the vehicle 200, and illustrates a state where the right side passenger in the first row hears the voice spoken by the left side passenger in the third row.

The sound device setting unit 11 of the controller 10 sets the microphones 21 and 26, and the speakers 31a, 31b, 36a, and 36b for the passengers in the first row and the third row as the control target devices. The voice control unit 12 of the controller 10 receives voice information of the left side passenger in the third row through the microphone 26. The voice control unit 12 outputs a reproduced voice of the left side passenger in the third row from the speaker 31b, and does not output it from the speaker 31a. That is, the voice control unit 12 increases a reproduced sound volume of the speaker 31b that is closer to the seating position of the left side passenger in the third row among the speakers 31a, 31b of the right side passenger in the first row to be larger than a reproduced sound volume of the speaker 31a that is farther, and thus, the right side passenger in the first row can hear the voice from the left side speaker 31b when the left side passenger in the third row speaks. Thus, the controller 10 increases the sound volume of the reproduced voice output from the speaker closer to the seating position of the speaking person among the plurality of speakers 3. In view of this, the magnitudes of the reproduced sound volumes output from the right and left speakers disposed at the respective seats enables to create a sense of direction in the embodiment.

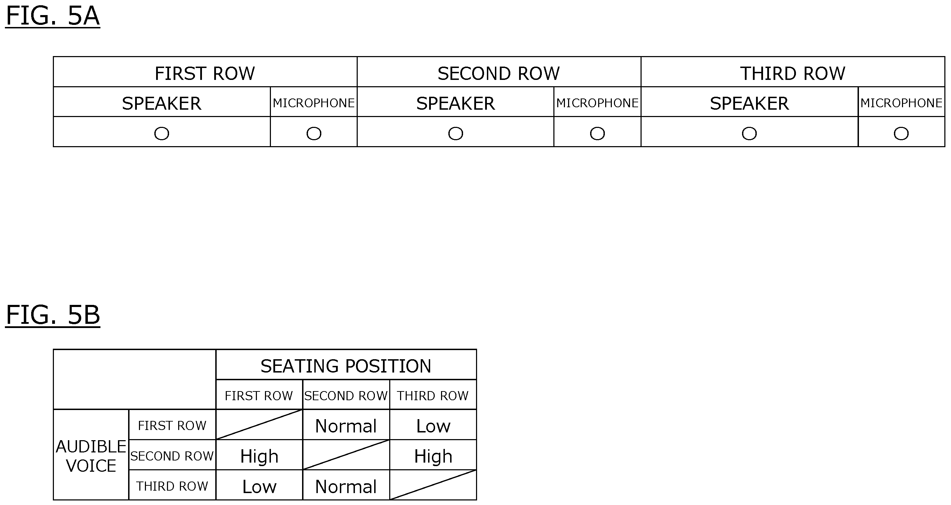

Next, with reference to FIGS. 5A, 5B, a control of a sound environment when all passengers have a conversation will be described. FIG. 5A is a table for describing on and off of the microphones/speakers in the first to third rows, and FIG. 5B is a table showing a correlation between the seating positions of the passengers and a voice audible by the passengers.

The sound device setting unit 11 of the controller 10 sets the microphones 2 and the speakers 3 of the passengers in the first to third rows as the control target devices. The sound device setting unit 11 may detect whether the passengers are sitting on the seats or not using the camera 5, seat sensors installed in the seats, or the like and set only the microphones 2 and the speakers 3 corresponding to the positions of the seats on which the passengers sit as the control target devices. When the passengers sit on the respective seats in the first to third rows, the sound device setting unit 11 turns on the microphones 2 and the speakers 3 of the passengers in the first row to the third row. When receiving voice information from the turned-on microphones, the voice control unit 12 of the controller 10 controls a sound volume of a reproduced voice in accordance with the positional relation between the position of the microphone that has received the voice information and the positions of the speakers 3 that output the reproduced voice. For example, as illustrated in FIG. 5B, when the passenger in the first row hears each of the voice of the passenger in the second row and the voice of the passenger in the third row, the voice control unit 12 increases a sound volume of the speakers 31a, 31b, 32a, and 32b that output the reproduced voice of the passenger in the second row to be larger than a sound volume of the speakers 31a, 31b, 32a, and 32b that output the reproduced voice of the passenger in the third row (make the reproduced sound volume of the passenger in the second row be a high level and the reproduced sound volume of the passenger in the third row be a low level). When the passenger in the third row hears each of the voice of the passenger in the first row and the voice of the passenger in the second row, the voice control unit 12 increases the sound volume of the speakers 35a, 35b, 36a, and 36b that output the reproduced voice of the passenger in the second row to be larger than the sound volume of the speakers 35a, 35b, 36a, and 36b that output the reproduced voice of the passenger in the first row (make the reproduced sound volume of the passenger in the second row be a high level and the reproduced sound volume of the passenger in the first row be a low level). When the passenger in the second row hears each of the voice of the passenger in the first row and the voice of the passenger in the third row, the voice control unit 12 makes the sound volume of the speakers 33a-33d and 34a-34d that output the reproduced voice of the passenger in the first row be the same volume as the sound volume of the speakers 33a-33d and 34a-34d that output the reproduced voice of the passenger in the third row (make the reproduced sound volumes of the passengers in the first and third rows be a normal level).

That is, the controller 10 reduces the sound volume of the reproduced sound volume as a distance between the seating position of the seat of the speaking person and the seating position of the seat of the hearing person increases. In view of this, the magnitudes of the reproduced sound volumes enable to create a sense of distance between the respective seats. For example, while the passengers in the first row and the second row are having a conversation, the passenger in the third row sometimes fails to participate in the conversation and feels isolated. In the embodiment, the passenger in the third row can smoothly participate in the conversation since he/she can easily hear the voices of the passengers in the first and second rows through the microphones 2 and the speakers 3.

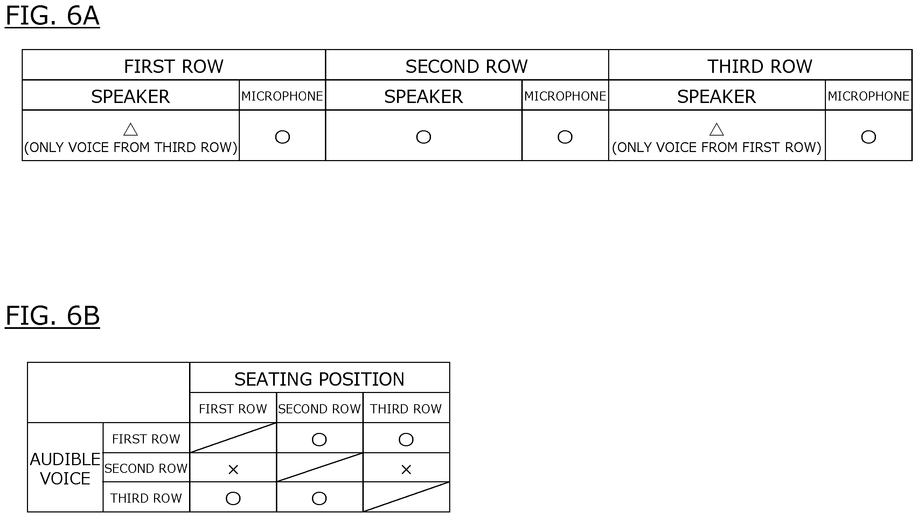

Next, with reference to FIGS. 6A, 6B, a control of a sound environment when a sound volume of a voice of a specific passenger is reduced so as to be unhearable by the other passengers. Such a sound environment may be applied to the following situations. For example, the situations include when a child in the vehicle 200 is making a noise and the voice of the child is desirably canceled. Other situations include when a driver would like to concentrate on driving or when a passenger on the front passenger seat would like to concentratedly hear a music while a lively conversation is taking place in the second row and the third row and the passengers are talking loudly. FIG. 6A is a table for describing on and off of the microphones/speakers in the first to third rows, and FIG. 6B is a table showing a correlation between the seating positions of the passengers and the voice audible by the passengers.

The sound device setting unit 11 of the controller 10 identifies the seating positions for reducing the sound volume of the specific passenger based on an operation command of the in-vehicle switch 4 and/or a captured image of the camera 5. For example, in the state where a child in the second row is making a noise, a driver would like to operate the in-vehicle switch 4 to cancel the voice of the child in the second row. In such a case, the driver operates the in-vehicle switch 4 so as to cancel the voice of the child, and the sound device setting unit 11 sets at least the microphones 23 and 24 of the passenger in the second row, and the speakers 31a, 31b, 32a, 32b, 35a, 35b, 36a, and 36b of the passengers in the first row and the third row as the control target speakers based on the operation command of the in-vehicle switch 4. The voice control unit 12 receives voice information of the passenger in the second row through the microphone 23 or the microphone 24, and reduces a sound volume of the voice of the passenger in the second row when it is output from the speakers 31a, 31b, 32a, 32b, 35a, 35b, 36a, and 36b in the first and third rows. The control that reduces the sound volume includes the control that lowers a sound volume level or the control that makes the sound volume zero.

The controller 10 controls the microphones 2 and the speakers 3 corresponding to the respective seating positions similarly to the above-described sound environment control when the passengers make a conversation between the first row and the third row. As illustrated in FIG. 6A, the speakers 3 in the first row and the third row output the voices of the respective seats, but cancel the voice of the seat in the second row. As illustrated in FIG. 6B, the passengers in the first row and the third row are able to hear the voices of one another, but not able to hear the voice of the passenger in the second row. The passenger in the second row is able to hear the voices of the passengers in the first row and the third row from the speakers 33a to 33d, and 34a to 34d. Therefore, the situation in which the passenger in the second row fails to participate in the conversation between the passenger in the first row and the passenger in the third row and feels isolated is avoidable.

Thus, the in-vehicle switch 4 has a function of adjusting a sound volume of a specific voice input from the microphone 2 corresponding to a certain seating position among the plurality of seats in the vehicle cabin. The passenger operates the in-vehicle switch 4 and selects the seat of which the sound volume is reduced. The controller 10 reduces the sound volume of the specific voice when it is output from the speakers based on the operation command of the in-vehicle switch 4. Alternatively, the controller 10 may inactivate the microphone installed in the specific seat (for example, the microphones in the second row). This enables to provide a sound environment in which a specific passenger's voice is not audible by the other passengers. Furthermore, the sound environment appropriate for conversation is provided between the seats other than the specific seating position, and therefore, the conversation can smoothly take place.

Not limited to the operation command of the in-vehicle switch 4, the controller 10 may reduce the sound volume of the specific passenger based on a captured image of the camera 5. For example, the controller 10 detects that a child is making a noise from the captured image of the camera. At this time, the controller 10 may detect that the child is making a noise from the voice detected by the microphone 2 of the child. The controller 10 then reduces the sound volume of the child voice when the child voice input from the microphone 2 of the child is output from the speakers 3. In view of this, the sound environment in which the voice of the child is not audible by the other passengers is providable.

While in the example in FIGS. 6A, 6B, the controller 10 controls to reduce the sound volume of the voice input from the passenger of the specific seat to be small, the controller 10 may control to increase a sound volume of a voice output from the speakers corresponding to a specific seating position, as a modification example of the embodiment. For example, when a sound volume of a voice of oneself is desirably increased to transmit the voice to a passenger on a seat far away in a conversation in a vehicle, the controller 10 may execute the control like the modification. Specifically, the in-vehicle switch 4 has a function to increase the sound volume of the voice output from the speakers 3 corresponding to the specific seating position among the plurality of seats in the vehicle cabin. The passenger operates the in-vehicle switch 4 so as to increase the voice of his/her own output from the speakers. At this time, the operation of the in-vehicle switch 4 may allow the speakers from which his/her own voice with increased sound volume is output to be selected by seat. The controller 10 then increases the sound volume of the reproduced voice when it is output from the speakers 3 based on the operation command of the in-vehicle switch 4 in the case where the voice of the speaking person is reproduced. In view of this, operation of a switch allows the specific passenger to easily hear another passenger's voice.

While in the above-described modification, the controller 10 increases the sound volume of the reproduced voice when it is output from the speakers 3 based on the operation command of the in-vehicle switch 4 in the case where the voice of the speaking person is reproduced, a target passenger whose voice is increased may be detected based, for example, on a captured image of the camera 5, not limited to the operation command of the in-vehicle switch 4, and the sound volume may be increased when the reproduced sound volume of the detected passenger is output in the speakers 3 of the other seats. Specifically, the sound device setting unit 11 executes image processing on the captured image of the camera 5, detects, for example, a passenger who wears a face mask, and sets at least the microphone 2 of the passenger wearing the face mask and the speakers of the other passengers having a conversation with this passenger as the control target speakers. The voice control unit 12 then increases a sound volume of the reproduced voice when it is output from the speakers 3 of the other passengers in the case where the voice of the passenger wearing the face mask is reproduced. Thus, the controller 10 increases the sound volume of the specific voice when the specific voice input from the microphone 2 corresponding to the specific seating position among the plurality of seats is output from the speakers 3. This allows a voice to be easily heard, even in a situation where, for example, a passenger wears a face mask and his/her voice is difficult to hear. The voice control unit 12 may increase sensitivity of the microphone 2 of the passenger who wears the face mask.

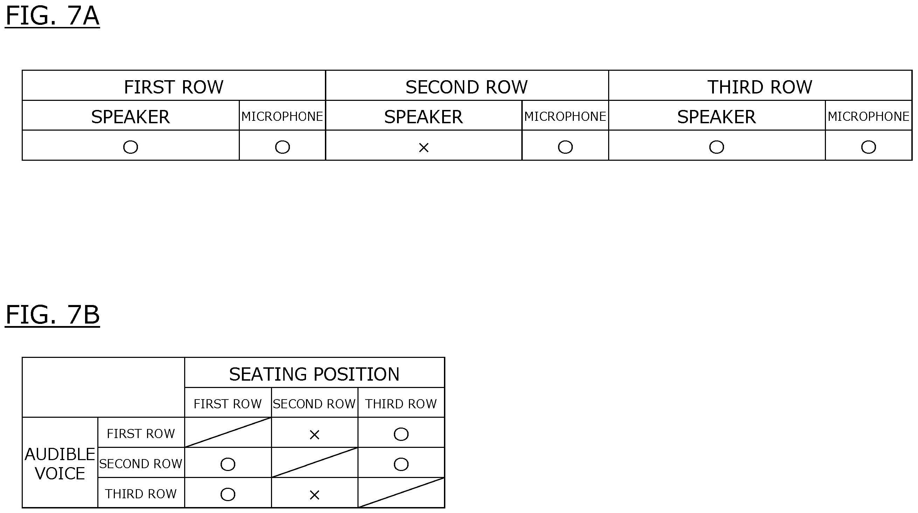

Next, with reference to FIGS. 7A, 7B, a control of a sound environment when the other passengers' voices are made unhearable for a specific passenger will be described. Such a sound environment is applied to the case where, for example, a passenger is asleep and the ambient sound is desirably reduced. FIG. 7A is a table for describing on and off of the microphones/speakers in the first to third rows, and FIG. 7B is a table showing a correlation between the seating positions of the passengers and the voice audible by the passengers.

The sound device setting unit 11 of the controller 10 identifies the seating positions for reducing a sound volume of a specific passenger based on an operation command of the in-vehicle switch 4 and/or a captured image of the camera 5. For example, assume that a voice output from the speakers in the second row is desirably cancelled by another passenger operating the in-vehicle switch 4 while a passenger in the second row is asleep. In such a case, the other passenger operates the in-vehicle switch 4 to cancel the voice output in the second row, the sound device setting unit 11 sets at least, the speakers 33a to 33d and 34a to 34d of the passenger in the second row as the control target speakers based on the operation command of the in-vehicle switch 4. The voice control unit 12 then reduces a sound volume of the voice output from the speakers 33a to 33d and 34a to 34d in the second row. A control of reducing the sound volume includes a control of lowering a sound volume level or a control of making the sound volume zero. The controller 10 controls the microphones 2 and the speakers 3 corresponding to the respective seating positions similarly to the above-described sound environment control when the passengers make a conversation between the first row and the third row. As illustrated in FIG. 7A, the speakers 3 have the reduced sound volume or the speakers 3 are turned off in the second row seats, and the speakers 3 in the first row and the third row output the voices of the passengers of the other seats. The microphones 2 are turned on in the first to third rows. As illustrated in FIG. 7B, the passenger in the second row is unable to hear the voice from the speakers 3, and the passengers in the first and third rows are able to hear the voices of the passengers in the other rows from the speakers 3.

Thus, the in-vehicle switch 4 has a function to adjust a sound volume of a specific voice input from the microphone 2 corresponding to a specific seating position among the plurality of seats in the vehicle cabin. The passenger then operates the in-vehicle switch 4 and selects the seat to have a reduced sound volume. In the example in FIGS. 7A and 7B, the microphones 2 as the sound volume adjustment targets are the microphones in the first and third rows, and the speakers 3 with the reduced sound volume are the speakers in the second row. In the example in FIGS. 7A and 7B, the controller 10 reduces the sound volume when it is input from the microphones 21, 22, 25, and 26 of the passengers in the first row or the third row and output from the speakers 33a to 33d and 34a to 34d of the passenger in the second row. This enables to provide a sound environment in which a specific passenger is unable to hear the other passengers' voices.

The controller 10 may determine whether a passenger in the vehicle cabin is asleep based on a captured image of the camera 5. Whether the passenger is asleep or not is determined simply by using a known monitoring system. The controller 10 reduces a sound volume of reproduced voices of the other passengers output from the speakers 3 of the passenger asleep when determining that the passenger is asleep. This enables to provide a comfortable environment for sleep of the passenger.

As a modification example of the embodiment, the noise processing unit 13 of the controller 10 may increase a noise reduction sound output from the speakers 3 of the passenger in a sleep when determining that the passenger is asleep. Increased noise reduction sound enables to provide a comfortable environment for sleep of the passenger because the noise around the passenger asleep is blocked.

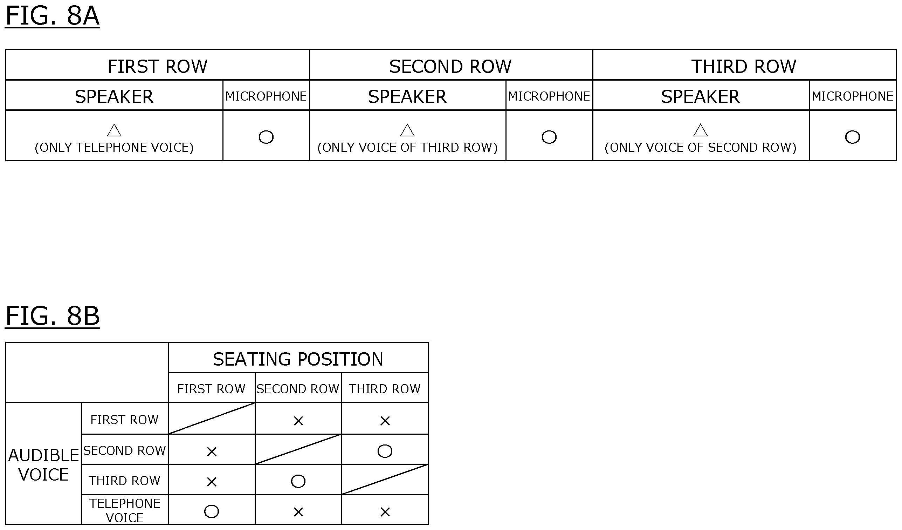

Next, with reference to FIGS. 8A, 8B, a control of a sound environment where a telephone call from a user outside the vehicle is received will be described. FIG. 8A is a table for describing on and off of the microphones/speakers in the first to third rows, and FIG. 8B is a table showing a correlation between the seating positions of the passengers and the voice audible by the passengers.

For example, when the communication device 6 receives a call command by telephone from outside the vehicle 200 to a driver, the sound device setting unit 11 sets the microphone 21 and the speakers 31a, 31b of the passenger as the control target devices such that the driver is able to talk through the microphone 21 and the speakers 31a, 31b. The sound device setting unit 11 sets the microphones 23 to 26 and the speakers 33a to 33d, 34a to 34d, 35a, 35b, 36a, and 36b as the control target devices so as to allow a conversation between the passengers in the second row and the third row. When the telephone call destination from outside is a passenger other than the driver, the sound device setting unit 11 simply sets the control target devices such that the passenger of the call destination is able to talk to the external user through the microphone 2 and the speakers 3 and the other passengers are able to have a conversation.

The voice control unit 12 control a sound volume of the speakers 3 so as to output a voice of a telephone only from the speakers 3 of the passenger as the call destination when the voice of the telephone from the user outside the vehicle is output. When the telephone call is for the driver, as illustrated in FIG. 8A, the voice control unit 12 outputs the telephone voice but not the voices of the passengers in the second and third rows from the speakers in the first row. The voice control unit 12 also outputs the voices of the passengers in the second and third rows but not the telephone voice from the speakers in the second row and the third row. The microphones 2 are on in the first to third rows. As illustrated in FIG. 8B, the passenger in the first row is able to hear only the telephone voice from the speakers 3, and the passengers in the second and third rows are able to hear the voices of the other passengers in the second and third rows from the speakers 3. This enables to provide the voice of the telephone call from outside the vehicle only to the passenger in need. In addition, a sound environment appropriate for conversation can be provided at the seats of the passengers not involved in the telephone call.

While the controls of the sound environments by the controller 10 have been described with the specific examples above, the following controls may be combined. When a notification sound of in-vehicle device is emitted while a driver is having a conversation with another passenger using the in-vehicle acoustic system according to the embodiment, the controller 10 may output the notification sound of the in-vehicle device from the speakers 31a, 31b of the driver in addition to the voice of the other passenger. At this time, the controller 10 may increase a sound volume of the notification sound of the in-vehicle device to be larger than a sound volume of the voice of the other passenger. When the notification sound of the in-vehicle device relates only to the driver, the controller 10 may output the notification sound of the in-vehicle device only from the speakers 31a, 31b of the driver. The controller 10 may reduce the sound volume of the voice of the passenger when the notification sound of the in-vehicle device is output from the speakers 31a, 31b. This enables the driver to hear the notification sound of the in-vehicle device even during the conversation with the passenger.

In the embodiment, when a system sound generated by a navigation system is output, the controller 10 may output the system sound only from the speakers 31a, 31b of the driver. The information presented by the navigation system is the information necessary for a driver in many cases. Therefore, the system sound of the navigation system may be output only from the speakers 31a, 31b of the driver. This enables the system sound to be transmitted only to the passenger who needs the information of the navigation system.

In the embodiment, the noise processing unit 13 of the controller 10 may execute a noise process when a voice of a passenger is output from the speakers 3. At this time, the voice control unit 12 increases the sound volume of the reproduced voice that reproduces the voice of the passenger as the sound volume of the noise reduction sound generated by the noise processing unit 13 is larger. For example, when the frequency band of the noise reduction sound and the frequency band of the voice of the passenger overlap, the sound volume of the voice of the passenger could be reduced because of the noise reduction sound. In such a case, increasing the sound volume of the reproduced voice in accordance with the magnitude of the noise reduction sound, a sound environment appropriate for a conversation by the passengers can be provided.

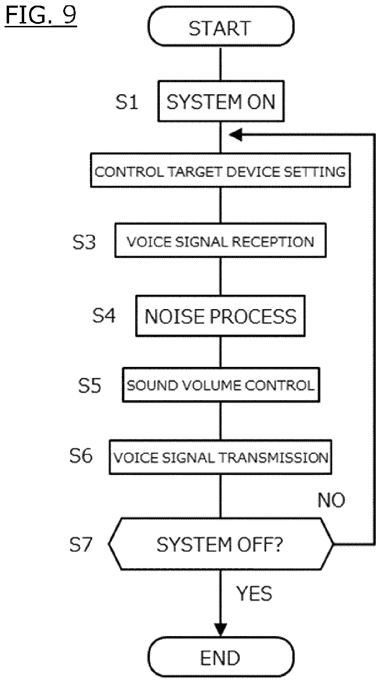

Next, with reference to FIG. 9, a control flow executed by the controller 10 will be described. FIG. 9 is a flow chart for describing a procedure of an in-vehicle acoustic control method executed by the controller 10.

At Step S1, when the power switch 1 is turned on, the controller 10 activates the in-vehicle acoustic system (system ON). At Step S2, the controller 10 sets the control target device based on an operation command of the in-vehicle switch 4, a captured image of the camera 5, and an external command received by the communication device 6. That is, the controller 10 determines the microphones 2 and the speakers 3 to be controlled under the in-vehicle acoustic system in order to provide an appropriate sound environment corresponding to the situations of the passengers and/or the vehicle based on the operation command of the in-vehicle switch 4 and the like. For example, when the passengers are having a conversation in the vehicle cabin, the controller 10 sets at least the microphones 2 and the speakers 3 of the passengers in the conversation as the control target devices.

At Step S3, the controller 10 receives a signal including a voice of a speaking person from the microphone 2 of the speaking person among the passengers who are having a conversation. At Step S4, the controller 10 executes the noise process when the signal including the voice of the speaking person includes a noise. At Step S5, the controller 10 controls a sound volume of a reproduced voice output from the speakers 3 of other passengers based on a positional relation between a seating position of the speaking person and seating positions of the other passengers who hear the voice when the voice of the speaking person is heard by the other passengers. For example, the controller 10 controls the sound volume of the reproduced voice in accordance with distances between the seating position of the speaking person and the seating positions of the other passengers who hear the voice and/or directions of the seating positions of the other passengers with respect to the seating position of the speaking person.

At Step S6, the controller 10 outputs the signal including the controlled reproduced sound volume to the speakers 3 of the other passengers. At Step S7, the controller 10 determines whether the in-vehicle acoustic system is turned off or not. For example, when an operation command to turn off the system or a command to turn off the power switch 1 is input to the controller 10 by the operation of the in-vehicle switch 4, the controller 10 turns the in-vehicle acoustic system off, and thus, the control flow illustrated in FIG. 9 is terminated. On the other hand, when determining that the in-vehicle acoustic system is not turned off, the control flow is returned to Step S2, and the controller 10 executes the control flow at Step S2 and thereafter. This optimizes the sound environments of the respective seats under the in-vehicle acoustic system during the conversation between the passengers.

As described above, the in-vehicle acoustic device according to the embodiment includes the controller 10 that controls the microphones 2 corresponding to the seating position of the speaking person (corresponding to a "first passenger" of the present invention) and the speakers 3 corresponding to the seating position of the hearing person (corresponding to a "second passenger" of the present invention) so as to cause the voice of the speaking person (corresponding to the "first passenger" of the present invention) input from the microphone 2 to be heard by the hearing person (corresponding to the "second passenger" of the present invention) via the speakers 3. The controller 10 controls a sound volume of a reproduced voice output from the speakers 3 corresponding to the seating position of the hearing person based on the positional relation between the seating position of the speaking person and the seating position of the hearing person. This enables the passengers to have a smooth conversation through the microphones and the speakers in the vehicle cabin.

While in the specific example describing with reference to FIG. 3A, FIG. 3B, FIG. 5A, FIG. 5B, FIG. 6A, FIG. 6B, FIG. 7A, FIG. 7B, FIG. 8A, and FIG. 8B, the control of the microphones 2 and the speakers 3 has been described as the control for each row of the first to third rows for facilitating the description, the control may be executed for each seat in the specific example as well.

The embodiment described above has been described for ease of understanding of the present invention, and has not been described for limiting the present invention. Accordingly, each component disclosed in the above-described embodiment has a gist including even all the design changes and equivalents belonging to the technical scope of the present invention.

### Description of Reference Numerals

- 1: power switch
- 2: microphone
- 3: speaker
- 4: in-vehicle switch
- 5: camera
- 6: communication device
- 10: controller
- 11: sound device setting unit
- 12: voice control unit
- 13: noise processing unit
- 14: telephone-call control unit
- 15: in-vehicle device sound control unit
- 200: vehicle

## Claims

1. An in-vehicle acoustic device disposed in a vehicle, comprising:
a plurality of speakers disposed in the vehicle;
a plurality of microphones disposed in the vehicle; and
a controller that controls the microphone corresponding to a first seating position of a first passenger and the speaker corresponding to a second seating position of a second passenger so as to cause a voice of the first passenger input from the microphone to be heard by the second passenger other than the first passenger via the speaker, wherein
the controller controls a sound volume of a reproduced voice output from the speaker corresponding to the second seating position based on a positional relation between the first seating position and the second seating position.

2. The in-vehicle acoustic device according to claim 1, wherein
the controller reduces the sound volume of the reproduced voice as a distance between the first seating position and the second seating position increases.

3. The in-vehicle acoustic device according to claim 1 or 2, wherein
the plurality of speakers are disposed corresponding to the second seating position, and
the controller increases the sound volume of the reproduced voice output from the speaker closer to the first seating position among the plurality of speakers.

4. The in-vehicle acoustic device according to any one of claims 1 to 3, wherein
the controller outputs a notification sound by an in-vehicle device from the speaker corresponding to a driver's seat of the vehicle.

5. The in-vehicle acoustic device according to any one of claims 1 to 4, comprising
a noise processing unit that generates a noise reduction sound for reducing a noise input from the microphone, wherein
the controller increases the sound volume of the reproduced voice output from the speaker as a sound volume of the noise reduction sound is larger.

6. The in-vehicle acoustic device according to any one of claims 1 to 5, comprising
an in-vehicle switch for adjusting a sound volume of a specific voice input from the microphone corresponding to a specific seating position among a plurality of seats in a vehicle cabin, wherein
the controller reduces the sound volume of the specific voice when the specific voice is output from the speaker based on an operation command of the in-vehicle switch.

7. The in-vehicle acoustic device according to any one of claims 1 to 5, wherein
when a voice input from the microphone corresponding to a specific seating position among the plurality of seats in a vehicle cabin is output from the speaker, the controller increases a sound volume of the voice.

8. The in-vehicle acoustic device according to any one of claims 1 to 7, wherein
when a voice input from the microphone corresponding to a seating position of a child among the plurality of seats in a vehicle cabin is output from the speaker, the controller reduces a sound volume of the voice.

9. The in-vehicle acoustic device according to any one of claims 1 to 8, wherein
the controller:
determines whether a passenger in a vehicle cabin is asleep or not, and
when determining that the passenger is asleep, reduces a sound volume of the reproduced voice output from the speaker corresponding to the seating position of the passenger in a sleep.

10. The in-vehicle acoustic device according to any one of claims 1 to 4, comprising
a noise processing unit that generates a noise reduction sound that reduces a noise inside the vehicle input from the microphone, wherein
the controller:
determines whether a passenger in a vehicle cabin is asleep or not; and
when determining that the passenger is asleep, increases the noise reduction sound output from the speaker corresponding to the seating position of the passenger in a sleep.

11. The in-vehicle acoustic device according to any one of claims 1 to 10, comprising
an in-vehicle switch for increasing the sound volume of the reproduced voice output from the speaker corresponding to the specific seating position among the plurality of seats in the vehicle cabin.

12. The in-vehicle acoustic device according to any one of claims 1 to 11, wherein
when a system sound generated by a navigation system is output, the controller outputs the system sound only from the speaker corresponding to the driver's seat.

13. The in-vehicle acoustic device according to any one of claims 1 to 11, wherein
when a voice of a telephone call from a user outside the vehicle is output, the controller outputs the telephone voice only from the speaker corresponding to a seating position of a passenger as a telephone call destination.

14. An in-vehicle acoustic control method of controlling an in-vehicle acoustic sound executed by a processor, comprising:
receiving a signal including a voice of a first passenger from a microphone corresponding to a first seating position of the first passenger among a plurality of the microphones disposed in a vehicle;
when the voice of the first passenger input from the microphone is caused to be heard by a second passenger other than the first passenger via a speaker, controlling a sound volume of a reproduced voice output from the speaker corresponding to a second seating position based on a positional relation between the first seating position and the second seating position of the second passenger; and
transmitting a signal including the controlled reproduced voice to the speaker corresponding to the second seating position.
